# EUROPEAN PATENT APPLICATION

(11) **EP 2 508 682 A2**
(43) Date of publication of application: **10.10.2012**
(21) Application number: 12386009.0
(22) Date of filing: 12.03.2012
(51) Int. Cl.: E03B 11/00, E03C 1/04

(54) **Traditional hand-operated water pump**

(30) Priority: 14.03.2011 GR 2011100155
(71) Applicant: Kotzamanis, Konstantinos, 104 43 Sepolia Attikis (GR)
(72) Inventor: Kotzamanis, Konstantinos, 104 43 Sepolia Attikis (GR)

(57) **Abstract**

This is a traditional water pump (1) that comprises a small tank (3) at its base, with a water supply and replenishment mechanism (8). It comprises a pipe (4) connecting the hand-operated traditional pump with the small tank at its base and a check valve to ensure the correct functioning of the pump. It is a small, autonomous system that replaces the traditional installation of a water pump. It allows us to create a virtual well that provides the desired location with a functional, decorative pump.

## Description

This invention concerns a method to convert the traditional way of pumping water from a (bored) well of a few meters deep into a hand-operated pump.

The traditional water pump 1 is characterised by its autonomy; it can be installed and operated at any location, without the need to drill a well several meters deep into the soil in order to find water. The pump comprises a water tank 3 lined with fibre glass and a pipe 4 with a check valve which is connected to the water pump.

The water tank 3 has a water connection 2 that feeds the float 5, which replenishes the water level during pumping.

Connection 2 feeds the float 6 which has the opposite function of the filling float and is closed when the water reaches the regulated level of float 5.

Connection 2 feeds the water drip switch 7 which is set to provide a continuous and freely adjustable drip rate, so that, in the course of one day, the water will rise to level 6 and start to lift the float 6. As a result, the flow (at float 6) is opened, which will immediately raise the water to the level of mechanism 8, lifting float 8 which opens orifice 10 and emptying the water tank down to level 10. Thus, part of the tank contents is refreshed even when the pump is not operated; the water inside the tank is not stagnant but always fresh and drinkable.

Tank 3 is hermetically sealed in order to prevent microbes and other undesirable organisms from entering the interior of the tank. Considering that the water level within the closed tank will rise and fall irregularly during pumping and emptying, the tank is fitted with an air filter 9 which ensures breathing of the hermetically sealed tank.

The traditional water pump can be installed at any desired location, decorating parks, yard and gardens, and will be functional without the need to drill the soil. It fulfils the requirements for potable water, when connected with the municipal water main.

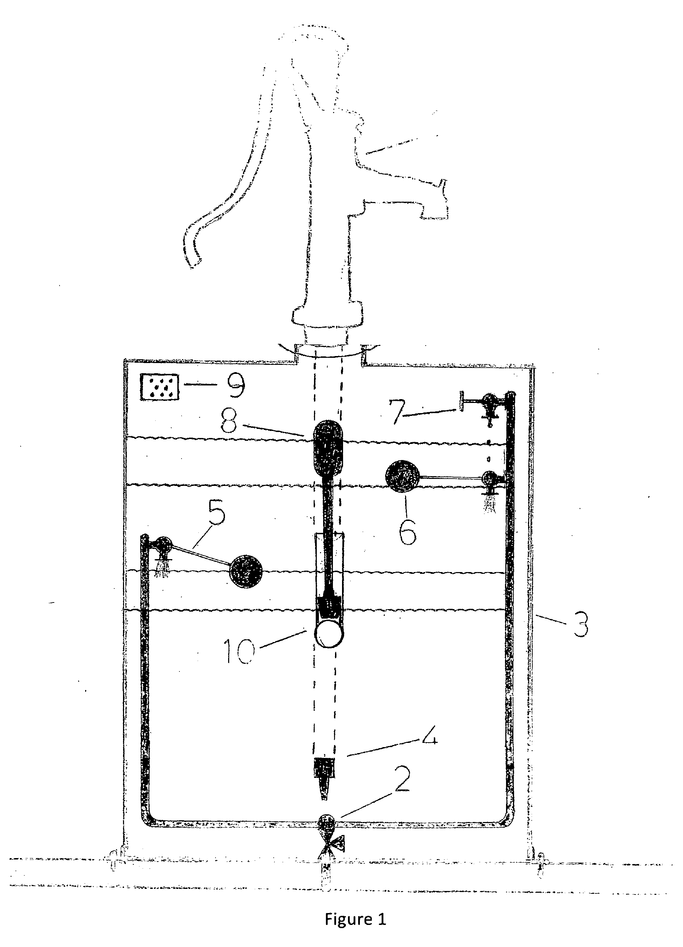

## Claims

1. The traditional water pump 1 is **characterised by** its autonomy; it can be installed and operated at any location, without the need to drill a well several meters deep into the soil in order to find water. The pump comprises a water tank 3 lined with fibre glass and a pipe 4 with a check valve which is connected to the water pump 1.
The water tank 3 has a water connection 2 that feeds the float 5, which replenishes the water level during pumping.
Connection 2 feeds the float 6 which has the opposite function of the filling float and is closed when the water reaches the regulated level of float 5.
Connection 2 feeds the water drip switch 7 which is set to provide a continuous and freely adjustable drip rate, so that, in the course of one day, the water will rise to level 6 and start to lift the float 6. As a result, the flow (at float 6) is opened, which will immediately raise the water to the level of mechanism 8, lifting float 8 which opens orifice 10 and emptying the water tank down to level 10. Thus, part of the tank contents is refreshed even when the pump is not operated; the water inside the tank is not stagnant but always fresh and drinkable.
Tank 3 is hermetically sealed in order to prevent microbes and other undesirable organisms from entering the interior of the tank. Considering that the water level within the closed tank will rise and fall irregularly during pumping and emptying, the tank is fitted with an air filter 9 which ensures breathing of the hermetically sealed tank.
The traditional water pump can be installed at any desired location, decorating parks, yard and gardens, and will be functional without the need to drill the soil. It fulfils the requirements for potable water, when connected with the municipal water main.
